Europäisches Patentamt

European Patent Office

Office européen des brevets

(11) Publication number: **0 289 094 B1**

## EUROPEAN PATENT SPECIFICATION

(45) Date of publication of patent specification: **04.03.92**

(51) Int. Cl.⁵: **A01B 49/02**, A01B 33/04, A01B 33/06, A01B 9/00

(21) Application number: **88200813.9**

(22) Date of filing: **27.04.88**

(54) A soil cultivating machine.

(30) Priority: **29.04.87 NL 8701010**

(43) Date of publication of application:
**02.11.88 Bulletin 88/44**

(45) Publication of the grant of the patent:
**04.03.92 Bulletin 92/10**

(84) Designated Contracting States:
**DE FR GB NL**

(56) References cited:
EP-A- 0 174 692          EP-A- 0 183 321
WO-A-86/05652          DE-A- 3 609 968
FR-A- 1 218 329          FR-E- 9 852
GB-A- 2 141 611          US-A- 1 725 190
US-A- 4 148 364

SOVIET INVENTIONS ILLUSTRATED, Week 18,
15th June 1983, Derwent Publications Ltd,
London, GB; & SU-A- 938 777 (FOREST FIRE
FIGHT) 30-06-1982

(73) Proprietor: **C. van der Lely N.V.**
**Weverskade 10 P.O. Box 26**
**NL-3155 ZG Maasland(NL)**

(72) Inventor: **Van der Lely, Cornelis**
**7, Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

EP 0 289 094 B1

## Description

The invention relates to a soil cultivating machine comprising a frame and a plurality of plough bodies arranged in a transverse row between a roller and rotatable soil working members.

Such a machine is known from DE-A-3609968. By using machines of this type the combined action of roller and plough bodies makes it possible to mix the weeds and/or crop residues with the earth so as to effect a turning under and a subsequent proper decomposition thereof. The invention has for its object to construct an implement of the above-defined type in which the turning under of crop residues and/or weeds will be improved.

According to the invention, this is achieved in that adjacent plough bodies alternatively move a strip of soil in opposite directions. This construction renders it possible to move the turned strips jointly to within the reach of soil working members which grip the turned strips and thereby move crop residues or weeds downwardly.

A further feature of the invention relates to a soil cultivating machine of the above-defined type, wherein a soil working member is provided that comprises at least one blade or tine which is provided at an angle of approximately 45° relative to its axis of rotation. The use of this soil working member construction renders it possible to effectively increase the active surface area of the blade or tine relative to the direction of rotation thereof, which is of particular importance with a view to turning under the crop residues and/or weeds.

Soil working members wherein blades or tines are provided at some angle relative to its axis of rotation are known from EP-A-0183321. In the implement described in this document the soil working members are provided directly behind the roller; as there are no plough bodies, there is no cooperation between roller and plough bodies and between plough bodies and soil working members.

A still further feature of the invention relates to a soil cultivating machine of the above-defined type, wherein the axis of rotation of a soil working member is provided at an angle to the horizontal plane and wherein the machine includes a scraper member that co-operates with the soil working member. Thus, it is possible to effectively keep the soil working members free from adhering material, so that their working action is not adversely affected or to a hardly appreciable extent only.

The application of an axis rotation of the soil working members which is provided at an angle to the horizontal plane is known per se from the above mentioned EP-A-0183321.

For a better understanding of the invention and to show how the same may be carried into effect, reference will now be made, by way of example, to the accompanying drawings, in which:

Figure 1 is a schematic plan view of a soil cultivating machine comprising the construction according to the invention;

Figure 2 is a side view of the machine shown in Figure 1;

Figure 3 is, to an enlarged scale, a view taken on the line III-III in Figure 1;

Figure 4 is to an enlarged scale, a view taken on the line IV-IV in figure 1;

Figure 5 is a view taken in the direction of the arrow V in Figure 3, and

Figure 6 is a view of a second embodiment of a soil cultivating machine according to the invention.

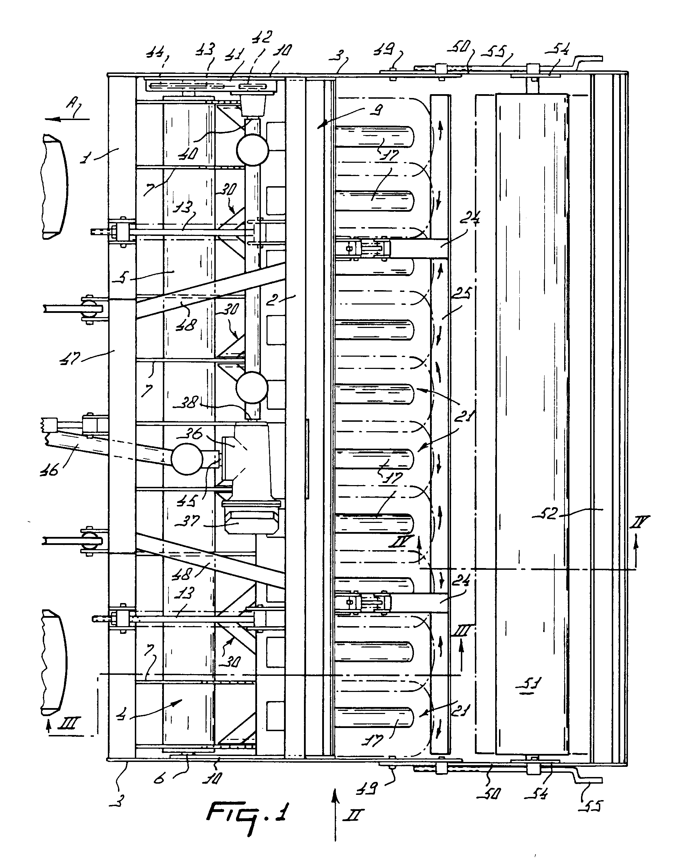

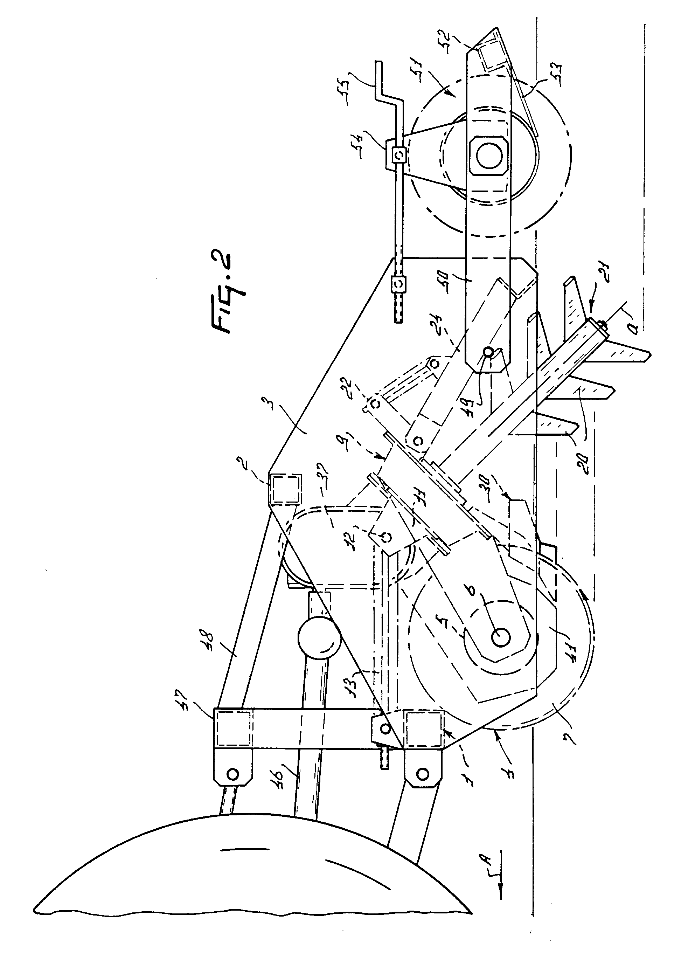

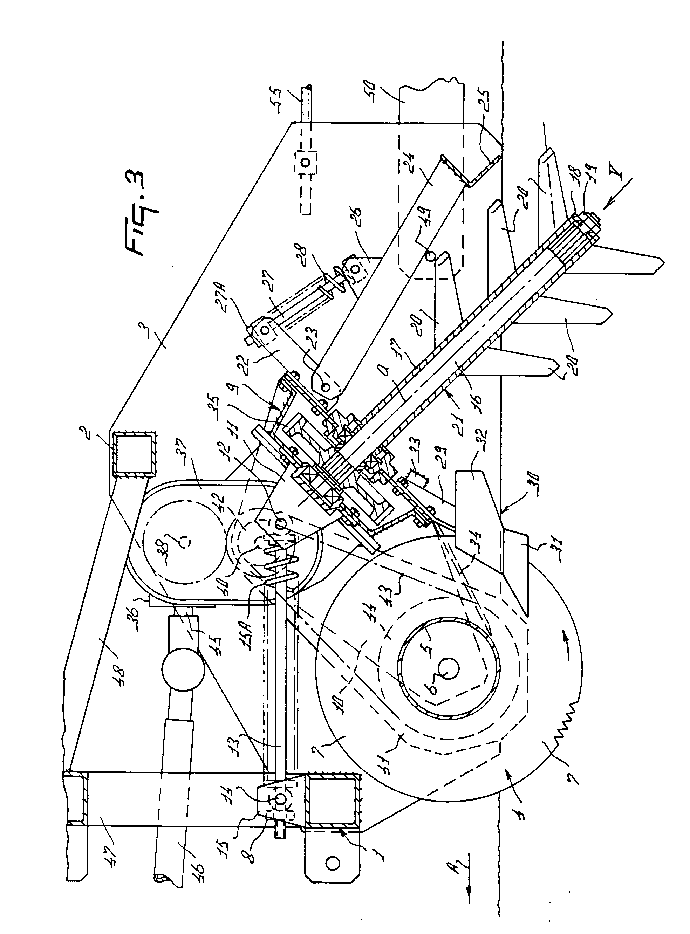

The implement shown in the drawings relates to a soil cultivating machine whose frame comprises two cross beams 1 and 2, which cross beams extend at least substantially parallel to each other and are arranged at least substantially horizontally at some interspace behind one another. The rear cross beam 2 is located at a higher level than the front cross beam 1 (Figure 3). The ends of the cross beams 1 and 2 are interconnected by means of plates 3 which extend at least substantially parallel to the direction of operative travel A and have the shape as shown in Figure 3. Just in front of the centre between the two cross beams 1 and 2 there is provided a roller 4 near the lower side of the plates 3. The roller 4 comprises a cylindrical portion 5, which at its ends is provided with shafts 6 which are supported rotatably in the plates 3. The cylindrical portion 5 includes equidistantly provided disc-shaped members 7, which disc-shaped members at their periphery are provided with sawteeth. The disc-shaped portions 7 located at the ends of the roller 4 are close to the plates 3 (Figure 1). Seen in plan view just behind the roller 4, there is arranged between the plates 3 a box-like frame portion 9 which by means of supports 10 is arranged pivotably about the shafts 6 of the roller. The frame portion 9 has a trapezoidal cross-section and is arranged such that its two parallel sides incline upwardly towards the rear at an angle of approximately 45° to the horizontal plane. At its upper side having the smallest side of the trapezoidal cross-section (Figure 3), the box-like frame portion 9 is provided with supports 11, between which there is arranged pivotably, by means of a shaft 12, one end of a supporting rod 13 extending forwardly over the roller 4 in the direction of operative travel A. By means of a block 14, the other end of the rod 13 is arranged pivotably between spaced-apart lugs 15 provided at the upper side of the front cross beam 1. Between the shaft 12 and the block 14 a spring 15A is disposed around the rod 13, the said rod being retained by a stop 8. Inside the box-like frame portion 9 there are arranged obliquely downwardly and rearwardly extending shafts 16, which are bearing-supported in the lower and upper walls thereof. Around that portion of each shaft 16 which extends beyond the box-like frame portion 9 - which shafts, in plan view, are located at least substantially halfway between two disc-shaped portions 7 of the roller 4 - there is provided a tubular member 17 which encloses said shaft with a tight fit (Figure 3). At its lower side, the tubular member is fitted on the shaft 16 by means of a retaining member 18 and a nut 19, the latter being adapted to co-operate with the thread on the lower end of the said shaft. In order to ensure an additional locking, the lower end of the shaft 16 and the inner lower end of the tubular member 17 are provided with splines. From its bottom upwardly, the tubular member 17 carries blades or tines 20, which are located equidistantly above each other in diametrically opposite pairs. The lowermost pair of blades or tines 20 is located at the lower end of the tubular member 17 and the uppermost pair just above the middle thereof. Taken in the direction of the longitudinal centre line $a$ of the shaft 16, which longitudinal centre line $a$ at the same time constitutes the axis of rotation of a soil working member 21 formed by the shaft 16 and the pairs of blades or tines 20, the said blades or tines 20 are in alignment (Figure 2). In side view, the diametrically opposite blades or tines 20 of a pair are arranged in the shape of a V, the longitudinal centre lines of which blades or tines enclose an angle of approximately 45° with the longitudinal centre line $a$ of the shaft 16. The pointed base of the V is directed upwardly (inverted V; see Figures 2 and 3). In side view, each of the blades or tines 20, which may be made of plate material, tapers from its point of connection to its free end. Taken in the direction of the axis of rotation $a$ of the soil working member 21, the blades or tines 20 are folded via a smooth curvature forwardly relative to the direction of rotation imparted to the soil working member during operation (Figure 5). Also in this direction of view, a blade tapers from its point of connection towards its free end. At the lower side of the box-like frame portion 9, there are arranged, remote from the ends, pairs of supports 22 which extend to beyond the rear side thereof. Near the leading ends of the supports 22 there is provided by means of a shaft 23, a bifurcate portion of an arm 24 which extends obliquely downwardly and rearwardly and at its lower end carries a scraper member 25. The scraper member 25 in the shape of an angle iron extends over the entire working width of the machine. The angle iron constituting the scraper 25 is positioned such that one leg thereof extends obliquely downwardly and rearwardly and the other one, which is connected to the arm, obliquely upwardly and rearwardly (Figure 3).

Between the free ends of the supports 22 and lugs 26 provided at the upper side of each arm 24 there is arranged, capable of pivotal movement and of sliding movement at one end, a rod 27 which is surrounded by a pressure spring 28 between the two pivot points. The rod 27 is retained in position by means of a stop 27A. At the front lower end of the box-like frame portion 9 there are arranged supports 29, which supports are located at the level of the disc-shaped portions 7 of the roller 4. Each of the supports 29 arranged at the ends of the frame portions 9 supports a plough body 30 consisting of a share 31 and a mould board 32. Plough bodies of identical structure are provided on the remainder of the supports 29. The respective plough bodies are arranged such that the point of the share 31 is located just beside a disc-shaped portion 7 of the roller 4 and two adjacent plough bodies displace a cut strip in the opposite sense. As is apparent from Figure 3, the point of the share 31 extends to halfway a disc-shaped portion 7. The supports 29 also include scraper members 34 for the cylindrical portion 5 of the roller 4. In order to prevent the box-like frame portion 9 from pivoting too far in the forward direction, stops 33 are provided at the inner side of the plates 3. Inside the box-like frame portion 9, each of the shafts 16 is provided with a pinion 35, the arrangement being such that the pinions on the shafts of adjacent soil working members 21 are in driving connection with each other. Near the centre of the box-like frame portion 9, the shaft 16 of a soil working member 21 is extended and reaches by means of this extension to into a gear box 36. Inside the gear box 36, the said extension is in connection via a bevel gear wheel transmission with a shaft which extends transversely to the direction of operative travel A and, via a speed variator 37, is in driving connection with a superjacent shaft 38 projecting from the gear box 36 at the side remote from the speed variator 37. The end of the shaft 38 that projects from the gear box 36 is connected, by means of a telescopic shaft 39 having universal joints provided near its ends, to a shaft 40 which is supported in a box 41 mounted at the inner side of a support 10. Inside the box 41, the shaft 40 is provided with a sprocket 42, around which a chain 43 is passed. The chain 43 is also passed around a sprocket 44 mounted on the shaft 6 of the roller 4. The sprocket 44 has a diameter larger than that of the sprocket 42 on the shaft 40. Inside the gear box 36 there is bearing-supported a forwardly extending shaft 45 which via a bevel gear wheel transmission is in driving connection with the shaft 38 therein. The shaft 45 can be connected to the power take-off shaft of a tractor by means of an intermediate shaft 46. Near its centre, the front cross beam 1 is provided with a coupling trestle 47 having two upright sides, which at their upper end are interconnected by a beam extending transversely to the direction of operative travel A. The trestle 47 includes coupling means for coupling to the three-point lifting hitch of a tractor. The beam at the upper side of the trestle 47 is connected to the rear frame beam 2 by means of supports 48 which diverge rearwardly therefrom. By means of a pin 49 extending transversely to the direction of operative travel A, a rearwardly extending arm 50 is arranged pivotably at the rear side of each of the plates 3. Between the arms 50 there is arranged freely rotatably a roller 51, which roller, in this embodiment, is designed as a packer roller. At its rear side, the roller 51 has a carrier 52 which extends transversely to the direction of operative travel A and to which are fitted scrapers 53, which are positioned in customary manner between the crowns of cams of the packer roller. In the region where the roller 51 is supported in bearings, each of the arms has an upwardly extending support 54, by which a threaded spindle 55 is supported pivotably. The leading end of the threaded spindle 55 is passed through a pivotal support at the rear of a plate 3, the arrangement being such that, by means of the threaded spindles 55 extending in the direction of operative travel A, the position of the roller 51 relative to the plates 3 and, hence, the working depth of the soil cultivating machine can be adjusted from the rear.

The machine described in the foregoing operates as follows:

During operation, the machine is connected to the three-point lifting hitch of a tractor by means of the three-point connection of the trestle 47, and the roller 4 and each of the soil working members 21 can be driven from the power take-off shaft via the intermediate shaft 46 and the above-described transmission. The roller 4 is driven in the direction indicated by an arrow in Figure 2, while adjacent soil working members 21 alternately rotate in opposite directions, the blades or tines 20 of superjacent pairs having, as stated above, their curved ends pointed forwardly in the direction of rotation. During travel of the machine in the direction of the arrow A, with a working depth setting as shown in Figure 2, the upper soil is divided into strips by means of trenches made by the sawtoothed disc-shaped portions 7 of the roller 4. Each of the strips is loosened by means of a plough body 30 and turned to a greater or lesser extent whilst being moved laterally. As has been stated before, adjacent plough bodies 30 move the strips of soil in opposite directions. The turned strips are jointly moved to within the reach of soil working members 21 which in that region rotate rearwardly and, by means of the forwardly curving blades or tines 20 of superjacent pairs, grip the turned strips and thereby move crop residues or weeds downwardly. The typical arrangement of the blades or tines 20 increases their effective surface area without an increase of the tendency of crop residues or weeds to adhere. Acting thus, the earth under the turned strips is loosened such that no smearing occurs at the bottom side. With the aid of the scraper member 25, adhering earth and crop residues, if any, can be scraped off and some degree of levelling is also effected. A compacting of the soil can be obtained by means of the packer roller 51, so that there is produced a strip of soil which is ready and suitable for sowing. The speed of rotation of the respective soil working members 21 can be changed by means of the speed variator 37. Moreover, during operation, the box-like frame portion 9 together with the respective soil working members 21 and the plough members 30 attached thereto can deflect upwardly from the stops 33 against the action of a spring, so that damage to a plough body 30 or a soil working member 21, respectively, is prevented. The scraper member 25 can deflect upwardly against the action of the spring 28 when hard objects get caught between one or more soil working members and the said scraper member.

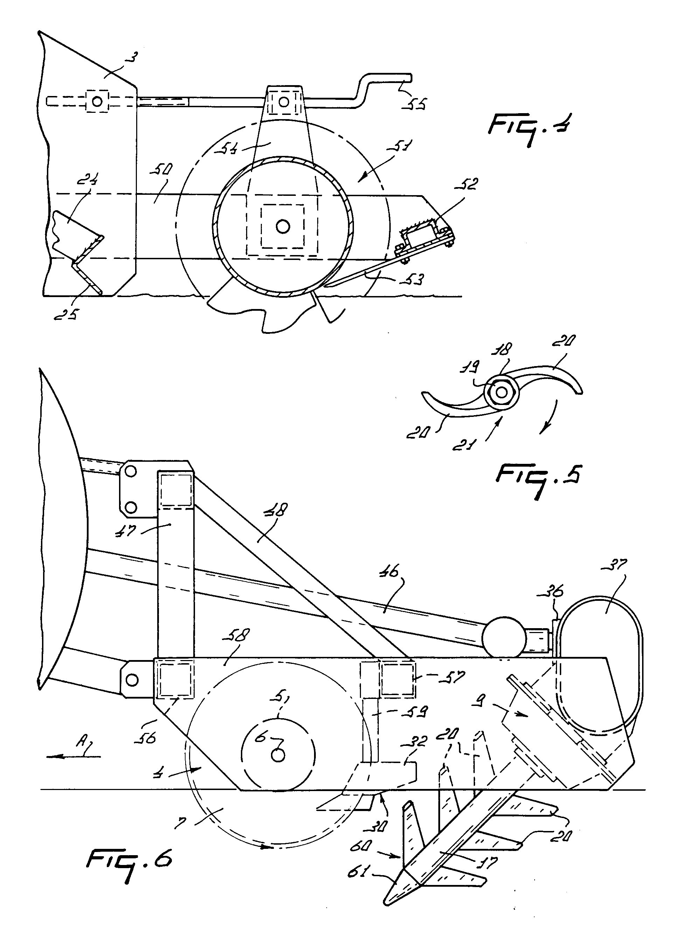

Figure 6 shows a second embodiment of a soil cultivating machine according to the invention, wherein the frame of the machine comprises two spaced-apart, at least substantially horizontal beams 56 and 57, which are arranged one behind the other, extend transversely to the direction of operative travel A and whose ends are interconnected by means of plates 58. The plates 58 are predominantly rectangular in shape, the leading sides of which extend from the upper sides downwardly and obliquely rearwardly. In a similar manner as in the preceding embodiment, a roller 4 is provided between the plates 58; however, in this embodiment, the roller is freely rotatable. By means of arms 59 attached to the rear frame beam 57, plough bodies 30 are arranged behind the roller 4, which plough bodies have the same position relative to the disc-shaped portions 7 as in the preceding embodiment. At the rear side, between the plates 58 there is provided a box-like frame portion 9 which is of the same construction as that in the first embodiment; however, in this case the box-like frame portion 9 is arranged such that the parallel sides of the trapezoidal cross-section extend obliquely upwardly and forwardly at an angle of approximately 45° to the horizontal plane and the smallest side of the trapezoidal cross-section is located at the bottom side. In a similar manner as in the preceding embodiment, shafts 16 of soil working members 60 are bearing-supported in the box-like frame portion 9, which shafts, in this embodiment, are arranged in such a way that their longitudinal centre lines constituting the axes of rotation a of the soil working members 60 are directed obliquely downwardly and forwardly, thereby enclosing an angle of approximately 45° with the horizontal plane. In this embodiment, each tubular member 17 is retained by means of a tapering retaining member 61 which co-operates with the thread provided on the end of the shaft 16. The tubular portion 17 is provided with blades or tines 20 which are of the same construction as in the preceding embodiment; however, in this case the blades or tines are arranged such that the tip of the V points downwardly, i.e. forwardly, as a result of which the strips cut loose by the disc-shaped portions 7 of the roller 4 and turned by the plough bodies 30 can be gripped very effectively for the turning-under of crop residues and/or weeds. The soil working members 60 are driven in the same manner as in the preceding embodiment. In this embodiment, the front frame beam 56 is provided with a trestle 47, which is of an identical construction as in the preceding embodiment and is connected in the same way to the rear frame beam by means of the supports 48.

The mode of operation of the implement in accordance with the above-described second embodiment substantially corresponds to that of the first embodiment.

In this embodiment, the lower ends of the soil working members 60 extend to below the plough bodies 30, as a result of which an effective loosening of the soil is effected, whilst the strips of soil shaped by the disc-shaped portions 7 of the roller 4 and turned by the plough bodies 30 are turned-under effectively by the blades or tines 20, thus resulting in a clean strip of cultivated soil. The implement in accordance with the second embodiment can be used in particular with success in working grasslands or fields having an excessive growth of weeds, as in this embodiment the turning-under of the turf, or of the weeds and/or of the crop residues, respectively, can be effected more effectively with the aid of the blades or tines curved forwardly in the direction of rotation of the soil working members.

## Claims

1. A soil cultivating machine comprising a frame and a plurality of plough bodies (30) arranged in a transverse row between a roller (4) and rotatable soil working members (21), characterized in that adjacent plough bodies (30) alternatively move a strip of soil in opposite directions.

2. A soil cultivating machine as claimed in claim 1, characterized in that the roller (4) is provided with disc-shaped portions (7), next to which, seen in plan view, a share point of a plough body (30) is located.

3. A soil cultivating machine as claimed in claim 1 or 2, characterized in that, during operation, the roller (4) can be power-driven.

4. A soil cultivating machine as claimed in any one of the preceding claims, characterized in that a soil working member (21) includes at least one blade or tine (20) which is provided at an angle of approximately 45° relative to the axis of rotation (a) of the soil working member (21).

5. A soil cultivating machine as claimed in any one of the preceding claims, characterized in that the axis of rotation (a) of the soil working member (21) encloses an angle of approximately 45° to the horizontal plane.

6. A soil cultivating machine as claimed in claim 4 or 5, characterized in that the blades or tines (20) are arranged in pairs one above the other, which pairs of blades or tines (20) are in alignment, taken in the direction of the axis of the soil working member.

7. A soil cultivating machine as claimed in any one of claims 4 to 6, characterized in that the blades or tines (20) of a pair are arranged in the shape of a V relative to each other.

8. A soil cultivating machine as claimed in any one of claims 4 to 7, characterized in that, taken in a direction perpendicular to the axis of rotation of the soil working member (21), the blades or tines (20) taper towards their free ends.

9. A soil cultivating machine as claimed in any one of claims 4 to 8, characterized in that, taken in the direction of the axis of rotation (a) of the soil working member (21), the blades or tines (20) also taper towards their free ends.

10. A soil cultivating machine as claimed in any one of claims 4 to 9, characterized in that, relative to the direction of rotation of a soil working member (21), the blades or tines (20) are curved forwardly.

11. A soil cultivating machine as claimed in any one of the preceding claims, characterized in that behind the soil working members (21), which ace arranged in a row, a scraper member (25) is provided which, during operation, co-operates with the soil working members (21).

**12.** A soil cultivating machine as claimed in claim 11, characterized in that the scraper member (25) is located above the soil working members (21) and extends over at least substantially the entire working width of the machine.

**13.** A soil cultivating machine as claimed in claim 11 or 12, characterized in that the scraper member (25) is mounted in such a way that it is movable upwardly relative to the soil working members (21), whereby it is pivotal against the action of a spring about a shaft extending transversely to the direction of operative travel.

**14.** A soil cultivating machine as claimed in any one of the preceding claims, characterized in that the axis of rotation (a) of a soil working member (21) extends obliquely downwardly and rearwardly.

**15.** A soil cultivating machine as claimed in any one of the preceding claims, characterized in that the axis of rotation of a soil working member (60) extends downwardly and forwardly.

**16.** A soil cultivating machine as claimed in any one of the preceding claims, characterized in that the soil working members (21) are supported in a frame portion (9) accommodating the drive of the soil working members (21), and that the plough bodies (30) are fitted to said frame portion (9).

**17.** A soil cultivating machine as claimed in claim 16, characterized in that the frame portion (9) also includes scrapers (34), which are adapted to co-operate with a cylindrical portion (5) of the roller (4).

**18.** A soil cultivating machine as claimed in any one of claims 15 to 17, characterized in that the free end of a soil working member (60) extends to under a plough body (30).

**19.** A soil cultivating machine as claimed in any one of claims 16 to 18, characterized in that the frame portion (9) carrying the soil working members (21) is supported pivotably by a shaft, which coincides with the axis (6) of rotation of the roller (4), whereby the frame portion (9) is pivotal by means of a support (13) extending in the direction of operative travel (A) against the action of a spring (15A).

**Revendications**

**1.** Machine pour cultiver le sol comprenant un châssis et une pluralité de corps de charrue (30) disposés en une rangée transversale entre un rouleau (4) et des organes rotatifs de travail du sol (21), **caractérisée** en ce que des corps de charrue (30) adjacents déplacent alternativement une bande de sol dans des directions opposées.

**2.** Machine pour cultiver le sol selon la revendication 1, caractérisée en ce que le rouleau (4) est muni de parties (7) en forme de disques, tout près desquels, vue en plan, est située une pointe de soc d'un corps de charrue (30).

**3.** Machine pour cultiver le sol selon la revendication 1 ou 2, caractérisée en ce que, pendant le travail, le rouleau (4) pourra être entraîné par un moteur.

**4.** Machine pour cultiver le sol selon l'une quelconque des revendications précédentes, caractérisée en ce qu'un organe de travail du sol (21) comporte au moins une lame ou dent (20) qui est prévue à un angle d'approximativement 45° par rapport à l'axe de rotation (a) de l'organe de travail du sol (21).

**5.** Machine pour cultiver le sol selon l'une quelconque des revendications précédentes, caractérisée en ce que l'axe de rotation (a) des organes de travail du sol (21) forme un angle d'approximativement 45° avec le plan horizontal.

**6.** Machine pour cultiver le sol selon la revendication 4 ou 5, caractérisée en ce que les lames ou dents (20) sont disposées par paires, l'une au dessus de l'autre lesquelles paires de lames ou dents (20) sont en alignement, vues dans le sens de l'axe de l'organe de travail du sol.

**7.** Machine pour cultiver le sol selon l'une quelconque des revendications 4 à 6, caractérisée en ce que les lames ou dents (20) d'une même paire sont disposées en forme de V, l'une par rapport à l'autre.

**8.** Machine pour cultiver le sol selon l'une quelconque des revendications 4 à 7, caractérisée en ce que, vues dans un sens perpendiculaire à l'axe de rotation de l'organe de travail du sol (21), les lames ou dents (20) s'effilent vers leurs extrémités libres.

**9.** Machine pour cultiver le sol selon l'une quelconque des revendications 4 à 8, caractérisée en ce que, vues dans le sens de l'axe de rotation (a) des organes de travail du sol (21), les lames ou dents (20) s'effilent également vers leurs extrémités libres.

10. Machine pour cultiver le sol selon l'une quelconque des revendications 4 à 9, caractérisée en ce que, par rapport au sens de rotation d'un organe de travail du sol (21) les lames ou dents (20) sont incurvées vers l'avant.

11. Machine pour cultiver le sol selon l'une quelconque des revendications précédentes, caractérisée en ce qu'il est prévu, derrière les organes de travail du sol (21) qui sont disposés en une rangée, un organe râcleur (25) qui coopère pendant le travail avec les organes de travail du sol (21).

12. Machine pour cultiver le sol selon la revendication 11, caractérisée en ce que l'organe râcleur (25) est situé au dessus des organes de travail du sol (21) et s'étend sur pratiquement au moins toute la largeur de travail de la machine.

13. Machine pour cultiver le sol selon la revendication 11 ou 12, caractérisée en ce que l'organe râcleur (25) est monté de manière à être mobile vers le haut par rapport aux organes de travail du sol (21), en étant pivotant contre l'action d'un ressort autour d'un arbre s'étendant transversalement au sens de marche du travail.

14. Machine pour cultiver le sol selon l'une quelconque des revendications précédentes, caractérisée en ce que l'axe de rotation (a) d'un organe de travail du sol (21) s'étend obliquement vers le bas et vers l'arrière.

15. Machine pour cultiver le sol selon l'une quelconque des revendications précédentes, caractérisée en ce que l'axe de rotation d'un organe de travail du sol (60) s'étend vers le bas et vers l'avant.

16. Machine pour cultiver le sol selon l'une quelconque des revendications précédentes, caractérisée en ce que les organes de travail du sol (21) sont supportés dans une partie de châssis (9) où est logée la transmission d'entraînement des organes de travail du sol (21), et en ce que les corps de charrue (30) sont montés sur ladite partie de châssis (9).

17. Machine pour cultiver le sol selon la revendication 16, caractérisée en ce que la partie de châssis (9) comporte aussi des râcleurs (34) qui sont adaptés pour coopérer avec une partie cylindrique (5) du rouleau (4).

18. Machine pour cultiver le sol selon l'une quelconque des revendications 15 à 17, caractérisée en ce que l'extrémité libre d'un organe de travail du sol (60) s'étend jusque sous un corps de charrue (30).

19. Machine pour cultiver le sol selon l'une quelconque des revendications 16 à 18, caractérisée en ce que la partie de châssis (9) portant les organes de travail du sol (21) est supportée de manière pivotante par un arbre qui coïncide avec l'axe de rotation (6) du rouleau (4), la partie de châssis (9) étant pivotante au moyen d'un support (18) s'étendant dans le sens de marche (A) du travail contre l'action d'un ressort (15A).

**Patentansprüche**

1. Bodenbearbeitungsmaschine mit einem Rahmen und einer Mehrzahl von Pflugkörpern (30), die in einer quer verlaufenden Reihe zwischen einer Walze (4) und drehbaren Bodenbearbeitungswerkzeugen (21) angeordnet sind, dadurch gekennzeichnet, daß einander benachbarte Pflugkörper (30) einen Bodenstreifen abwechselnd in entgegengesetzte Richtungen bewegen.

2. Bodenbearbeitungsmaschine nach Anspruch 1, dadurch gekennzeichnet, daß die Walze (4) mit scheibenförmigen Teilen (7) versehen ist, neben denen sich, in Draufsicht, ein Scharpunkt eines Pflugkörpers (30) befindet.

3. Bodenbearbeitungsmaschine nach Anspruch 1 oder 2, dadurch gekennzeichnet, daß die Walze (4) während des Betriebs zwangläufig antreibbar ist.

4. Bodenbearbeitungsmaschine nach einem der vorhergehenden Ansprüche, dadurch gekennzeichnet, daß ein Bodenbearbeitungswerkzeug (21) wenigstens ein Messer oder einen Zinken (20) aufweist, das bzw. der relativ zu der Drehachse (a) des Bodenbearbeitungswerkzeuges (21) in einem Winkel von ca. 45° vorgesehen ist.

5. Bodenbearbeitungsmaschine nach einem der vorhergehenden Ansprüche, dadurch gekennzeichnet, daß die Drehachse (a) des Bodenbearbeitungswerkzeuges (21) mit der Horizontalen einen Winkel von ca. 45° einschließt.

**6.** Bodenbearbeitungsmaschine nach Anspruch 4 oder 5,
dadurch gekennzeichnet, daß die Messer bzw. Zinken (20) paarweise übereinander angeordnet sind, wobei die Messer- bzw. Zinkenpaare (20) in Richtung der Achse des Bodenbearbeitungswerkzeugs miteinander fluchten.

**7.** Bodenbearbeitungsmaschine nach einem der Ansprüche 4 bis 6,
dadurch gekennzeichnet, daß die Messer bzw. Zinken (20) eines Paares relativ zueinander V-förmig angeordnet sind.

**8.** Bodenbearbeitungsmaschine nach einem der Ansprüche 4 bis 7,
dadurch gekennzeichnet, daß sich die Messer bzw. Zinken (20), in zur Drehachse des Bodenbearbeitungswerkzeuges (21) rechtwinkliger Richtung betrachtet, in Richtung auf ihre freien Enden verjüngen.

**9.** Bodenbearbeitungsmaschine nach einem der Ansprüche 4 bis 8,
dadurch gekennzeichnet, daß sich die Messer bzw. Zinken (20), in Richtung der Drehachse (a) des Bodenbearbeitungswerkzeuges (21) betrachtet, ebenfalls in Richtung auf ihre freien Enden verjüngen.

**10.** Bodenbearbeitungsmaschine nach einem der Ansprüche 4 bis 9,
dadurch gekennzeichnet, daß die Messer bzw. Zinken (20) in bezug auf die Rotationsrichtung eines Bodenbearbeitungswerkzeuges (21) nach vorne gekrümmt sind.

**11.** Bodenbearbeitungsmaschine nach einem der vorhergehenden Ansprüche,
dadurch gekennzeichnet, daß hinter den in einer Reihe angeordneten Bodenbearbeitungswerkzeugen (21) ein Streichglied (25) vorgesehen ist, das während des Betriebs mit den Bodenbearbeitungswerkzeugen (21) zusammenarbeitet.

**12.** Bodenbearbeitungsmaschine nach Anspruch 11,
dadurch gekennzeichnet, daß das Streichglied (25) über den Bodenbearbeitungswerkzeugen (21) angeordnet ist und sich wenigstens im wesentlichen über die gesamte Arbeitsbreite der Maschine erstreckt.

**13.** Bodenbearbeitungsmaschine nach Anspruch 11 oder 12,

dadurch gekennzeichnet, daß das Streichglied (25) derart angebracht ist, daß es relativ zu den Bodenbearbeitungswerkzeugen (21) nach oben bewegbar ist, wobei es gegen die Wirkung einer Feder um eine quer zur Arbeitsrichtung verlaufende Achse schwenkbar ist.

**14.** Bodenbearbeitungsmaschine nach einem der vorhergehenden Ansprüche,
dadurch gekennzeichnet, daß sich die Drehachse (a) eines Bodenbearbeitungswerkzeuges (21) schräg nach hinten unten erstreckt.

**15.** Bodenbearbeitungsmaschine nach einem der vorhergehenden Ansprüche,
dadurch gekennzeichnet, daß sich die Drehachse eines Bodenbearbeitungswerkzeuges (60) nach vorne unten erstreckt.

**16.** Bodenbearbeitungsmaschine nach einem der vorhergehenden Ansprüche,
dadurch gekennzeichnet, daß die Bodenbearbeitungswerkzeuge (21) in einem Gestellteil (9) abgestützt sind, das den Antrieb der Bodenbearbeitungswerkzeuge (21) umschließt, und daß die Pflugkörper (30) an dem Gestellteil (9) angebracht sind.

**17.** Bodenbearbeitungsmaschine nach Anspruch 16,
dadurch gekennzeichnet, daß das Gestellteil (9) Abstreifer (34) aufweist, die zum Zusammenarbeiten mit einem zylindrischen Bereich (5) der Walze (4) ausgelegt sind.

**18.** Bodenbearbeitungsmaschine nach einem der Ansprüche 15 bis 17,
dadurch gekennzeichnet, daß sich das freie Ende eines Bodenbearbeitungswerkzeuges (60) bis unter einen Pflugkörper (30) erstreckt.

**19.** Bodenbearbeitungsmaschine nach einem der Ansprüche 16 bis 18,
dadurch gekennzeichnet, daß das die Bodenbearbeitungswerkzeuge (21) tragende Gestellteil (9) schwenkbar von einer Achse abgestützt ist, die zur Drehachse (6) der Walze (4) koaxial ist, wobei das Gestellteil (9) mittels einer sich in Arbeitsrichtung (A) erstreckenden Stütze (13) gegen die Wirkung einer Feder (15A) verschwenkbar ist.

FIG. 1

FIG.2

FIG.3

EP 0 289 094 B1

FIG.4

FIG.5

FIG.6

12